# EUROPEAN PATENT SPECIFICATION

(11) **EP 3 446 837 B1**
(45) Date of publication and mention of the grant of the patent: **07.06.2023**
(21) Application number: 18155643.2
(22) Date of filing: 07.02.2018
(51) Int. Cl.: B25J 9/16

(54) **ROBOT CONTROL DEVICE, ROBOT SYSTEM, ROBOT CONTROL METHOD, AND ROBOT CONTROL PROGRAM**
ROBOTERSTEUERUNGSVORRICHTUNG, ROBOTERSYSTEM, ROBOTERSTEUERUNGSVERFAHREN UND ROBOTERSTEUERUNGSPROGRAMM
DISPOSITIF DE COMMANDE DE ROBOT, SYSTÈME DE ROBOT, PROCÉDÉ DE COMMANDE DE ROBOT ET PROGRAMME DE COMMANDE DE ROBOT

(30) Priority: 25.08.2017 JP 2017161770
(43) Date of publication of application: 27.02.2019
(73) Proprietor: OMRON CORPORATION, Kyoto-shi, Kyoto 600-8530 (JP)
(72) Inventor: HASHIMOTO, Minoru, Kyoto-shi,, Kyoto 600-8530 (JP); TANI, Yoshiharu, Kyoto-shi,, Kyoto 600-8530 (JP); OSAKO, Kazunori, Kyoto-shi,, Kyoto 600-8530 (JP); HIGUCHI, Toshiyuki, Kyoto-shi,, Kyoto 600-8530 (JP); KAMISONO, Daichi, Kyoto-shi,, Kyoto 600-8530 (JP); FUJITA, Masaki, Kyoto-shi,, Kyoto 600-8530 (JP)
(74) Representative: Emde, Eric

(56) References cited:
- DE-A1- 10 361 132
- US-A1- 2016 224 012
- Sandor Szabo ET AL: "A Testbed for Evaluation of Speed and Separation Monitoring in a Human Robot Collaborative Environment", National Institute of Standards and Technology, 1 March 2012 (2012-03-01), XP055472373, Gaithersburg, MD DOI: 10.6028/NIST.IR.7851 Retrieved from the Internet: URL:https://ws680.nist.gov/publication/get _pdf.cfm?pub_id=910293 [retrieved on 2018-05-03]

## Description

### BACKGROUND

### Technical Field

The present invention relates to a technology for realizing cooperative work between a robot and a moving body.

### Description of Related Art

Conventionally, work performed simultaneously by a robot and a worker (person) in the same space (cooperative work) has increased at production sites. In such cooperative work, it is necessary to prevent injury to a worker and failure of a robot due to contact (collision) between the robot and the worker.

For example, in JP 4648486 B, deceleration of a speed at which a robot can move according to a condition considering a distance between a worker and the robot, and provision of a robot entry prohibition region for performing control of not allowing the robot to enter was investigated.

In addition, in JP 5370127 B, control for performing deceleration and emergency stop of a robot using a distance between the robot and a worker was investigated.

In US 2016/224012 A1, an analysis module may detect that an unintended object is approaching the robotic equipment, and based on a proximity and/or a speed of approach of the object to the robotic equipment, the analysis module may instruct the robotic equipment to reduce an operating speed and/or stop motion of the robotic equipment.
In addition, in a publication document: "A testbed for evaluation of speed and separation monitoring in a human robot collaborative environment", National Institute of Standards and Technology, Gaithersburg, MD DOI: 10.6028/NIST.IR.7851, 1 March 2012, several testbeds including speed and separation monitoring (SSM) testbed, robot SSM interface and validation testing are introduced.
In DE 103 61 132 A1, a method for monitoring the movement of an object such as the handling mass of a handling unit relative to objects in a workspace around it is introduced. According to the method the kinetic energy of the moving object and its distance from surrounding objects are continuously determined. Based on the calculated values the object is braked until a desired kinetic energy is obtained relative to surrounding objects.

### SUMMARY

However, in order to secure a distance at which a robot and a worker are safe, it was necessary to secure a maximum region in which the robot can move. In addition, when a robot is decelerated using a distance between the robot and a worker, it is necessary to decelerate the robot even if the worker does not move, and thus productivity is reduced. Here, a worker is taken as an example, but the same may be applied to other moving bodies.

It is an object of the present invention to prevent collision between a robot and a moving body while the robot is moving without increasing a distance between the robot and the moving body to secure safety of the moving body.

In order to achieve the above object, the robot control device of the present invention is provided as set forth in claim 1. Moreover, according to other aspects of the present invention, a robot system as set forth in claim 6, a method of controlling a robot as set forth in claim 7, and a corresponding program as set forth in claim 8 are provided. Preferred embodiments of the present invention may be gathered from the dependent claims.

A robot arm which is able to move about a support point, a detection unit which detects a relative positional relationship with a moving body, a control unit which generates a drive control signal of an actuator which causes the robot arm to be able to move on the basis of a change in the relative positional relationship between the robot arm and the moving body detected by the detection unit, and an output unit which outputs the drive control signal generated by the control unit to the actuator are provided.

Also, the detection unit detects the relative positional relationship between the robot arm and the moving body by a sensor attached to the robot arm. The control unit generates the drive control signal which changes a speed at which the robot arm is able to move in accordance with a change in the relative positional relationship with the moving body.

According to this configuration, it is possible to detect a relative positional relationship between the robot arm and the moving body, and generate the drive control signal of the actuator which causes the robot arm to be able to move. The output unit outputs the drive control signal to the actuator. Thereby, it is possible to detect a relative positional relationship between the robot arm and the moving body by the sensor attached to the robot arm, and it is possible to generate the drive control signal which changes a speed at which the robot arm is able to move in accordance with a change in the relative positional relationship with the moving body.

Therefore, it is possible to control the robot using the relative positional relationship between the robot arm and the moving body. Since unnecessary deceleration and emergency stop of the robot can be prevented, productivity is improved.

The robot arm may include the support point formed on one end portion thereof and the sensor attached to the other end portion thereof. With such a configuration, the robot arm can detect a relative position of the moving body at a position at which a distance to the moving body is furthest, that is, a position at which the robot arm and the moving body are most likely to collide, and thus it is possible to reduce the number of sensors.

The control unit may generate the drive control signal using a relative speed between the robot arm and the moving body calculated from a change in the relative positional relationship between the robot arm and the moving body. With such a configuration, it is possible to generate the drive control signal by acquiring the relative speed according to a change in the relative positional relationship between the robot arm and the moving body. Further, it is possible to calculate the relative positional relationship (distance) from the relative speed.

The control unit may generate the drive control signal using a relative distance between the robot arm and the moving body calculated from a change in the relative speed between the robot arm and the moving body. With such a configuration, it is possible to generate a drive control signal by acquiring the relative distance due to a change in the relative speed between the robot arm and the moving body. Further, it is possible to calculate the relative speed from the relative distance.

The control unit may generate the drive control signal for stopping the robot arm when the relative distance between the robot arm and the moving body is shorter than a predetermined stopped distance. With such a configuration, when the robot arm enters a distance assumed to be safe in advance, it is possible to instantly stop the robot.

The control unit may generate the drive control signal for decelerating or accelerating the robot arm when the relative distance between the robot arm and the moving body is longer than a predetermined stopped distance. With such a configuration, an unnecessary emergency stop of the robot can be prevented, and productivity can be improved.

According to the present invention, it is possible to secure safety of the moving body when the robot is able to move without increasing the distance between the robot and the moving body.

### BRIEF DESCRIPTION OF THE DRAWINGS

FIG. 1 is a schematic view illustrating a positional relationship between a robot and a worker.
FIG. 2 is a block diagram showing a flow of control of a sensor and a controller.
FIG. 3 is a schematic view of a method of estimating a relative distance in an emergency stop.
FIG. 4 is a flowchart showing a flow of control of the sensor and the controller.
FIG. 5A and FIG. 5B are schematic views of calculation of a relative speed of a robot hand and a worker when the robot hand is able to move.
FIG. 6A and FIG. 6B are schematic views of calculation of a relative speed of a robot hand and a worker when the robot hand is able to move in a rotating direction.

### DESCRIPTION OF THE EMBODIMENTS

Hereinafter, embodiments of the present invention will be described.

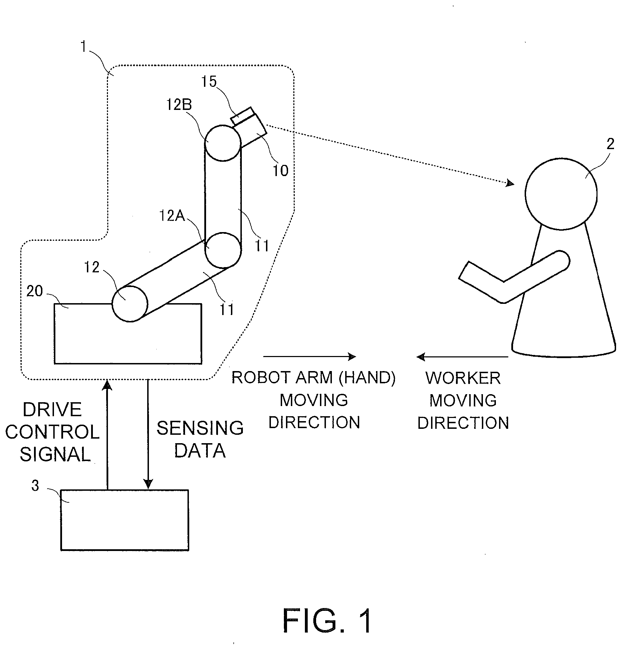

FIG. 1 is a schematic view illustrating a relationship between a robot 1, a worker 2, and a controller 3 using a robot control device according to this example. The robot 1 of this example includes a plurality of robot aims 11, support points (joints) 12, 12A, and 12B, and a robot hand 10. A sensor 15 is provided in the robot hand 10. The robot 1 is fixed to a robot base 20 by the support point 12. The robot base 20 may have a turning structure.

The support points 12, 12A and 12B can be moved as joints of the robot 1. The robot 1 includes an actuator as a drive mechanism for moving these joints.

A distance between the robot and a moving body in the present invention refers to a distance between a position of the robot hand 10 farthest from a base point of the robot base 20 and the moving body. In other words, this is a distance between an end of a maximum range of the robot at that time and the moving body. A range in which the robot can move varies depending on the number of joints (number of axes).

The sensor 15 of the robot 1 detects a relative positional relationship with the worker 2. The worker 2 is a moving body in the present invention. The controller 3 is a control unit of the present invention.

The sensor 15 is formed as, for example, a displacement sensor, an ultrasonic sensor, a millimeter wave sensor, an optical sensor, or the like. A relative position detected by the sensor 15 is three-dimensional if the robot hand 10 (robot arm 11) can move in three dimensions. Further, the relative position detected by the sensor 15 is two-dimensional if the robot hand 10 (robot arm 11) can move in two dimensions.

The sensor 15 continuously detects the relative position at predetermined time intervals. It is assumed that the worker 2 moves in a worker movement direction, and similarly, the robot hand 10 moves in a robot arm movement direction.

The sensor 15 calculates a relative speed between the worker 2 and the robot hand 10. The sensor 15 transmits the calculated relative speed as sensing data to the controller 3.

The controller 3 generates a drive control signal based on a predetermined risk determination of the sensing data. The controller 3 transmits the drive control signal to the robot 1. When the drive control signal is received, the robot 1 transmits the drive control signal to actuators provided in the support points 12, 12A and 12B.

Here, the risk determination refers to a prescribed value determined so that the robot 1 and the worker 2 are capable of moving safely without collision.

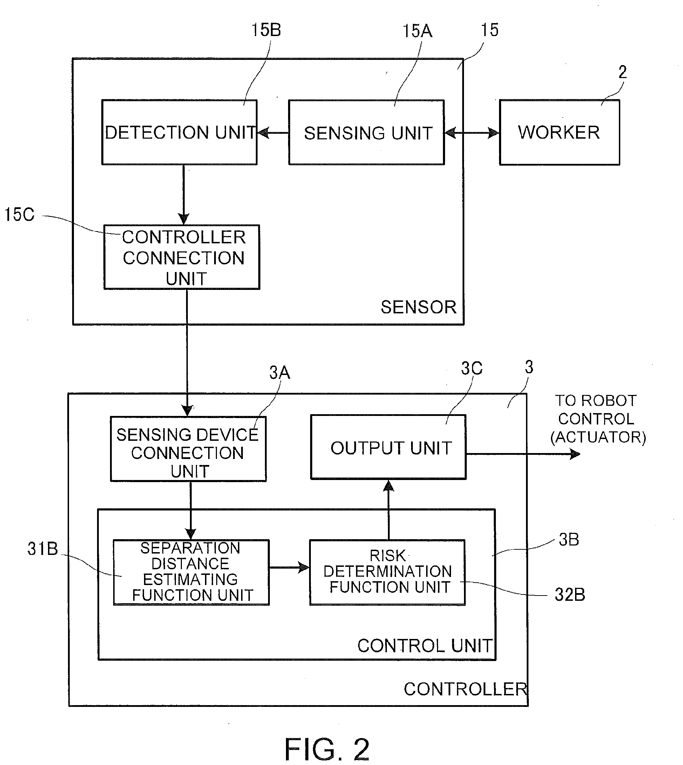

Referring to a functional block diagram of FIG. 2, a flow of control of a sensor and a controller will be described. A sensing unit 15A, a detection unit 15B, and a controller connection unit 15C are provided in the sensor 15. A sensing device connection unit 3A, a control unit 3B, and an output unit 3C are provided in the controller 3. A separation distance estimating function unit 31B and a risk determination function unit 32B are provided in the control unit 3B. It is assumed that the sensor 15 is attached to the robot hand 10 (a distal end of the robot arm 11) of the robot 1. Also, the sensor 15 is assumed to be, for example, a displacement sensor and will be described below.

The sensing unit 15A is a sensing element and outputs a sensor signal corresponding to the positional relationship between the sensor 15 including the sensing unit 15A itself and the worker 2 to the detection unit 15B.

The detection unit 15B calculates the relative positional relationship of the sensor 15 with respect to the worker 2 using the sensor signal.

The detection unit 15B outputs the relative positional relationship to the controller connection unit 15C. The controller connection unit 15C transmits the relative positional relationship to the sensing device connection unit 3A.

The sensing device connection unit 3A receives the relative positional relationship from the controller connection unit 15C. The sensing device connection unit 3A transmits the relative positional relationship to the separation distance estimating function unit 31B.

The separation distance estimating function unit 31B calculates a relative speed of the sensor 15 and the worker 2 from a temporal change of the relative positional relationship. Also, a stopped relative distance when an emergency stop occurs is calculated from the relative positional relationship.

The separation distance estimating function unit 31B transmits the stopped relative distance and the relative speed to the risk determination function unit 32B.

The risk determination function unit 32B transmits the drive control signal generated by the predetermined risk determination to the output unit 3C on the basis of the stopped relative distance and the relative speed.

The output unit 3C transmits the drive control signal to the actuator of the robot 1.

When the sensor 15 is a speed sensor which senses a speed, the relative speed between the sensor 15 and the worker 2 is acquired, and the separation distance estimating function unit 31B can calculate a relative positional relationship by integrating the relative speeds.

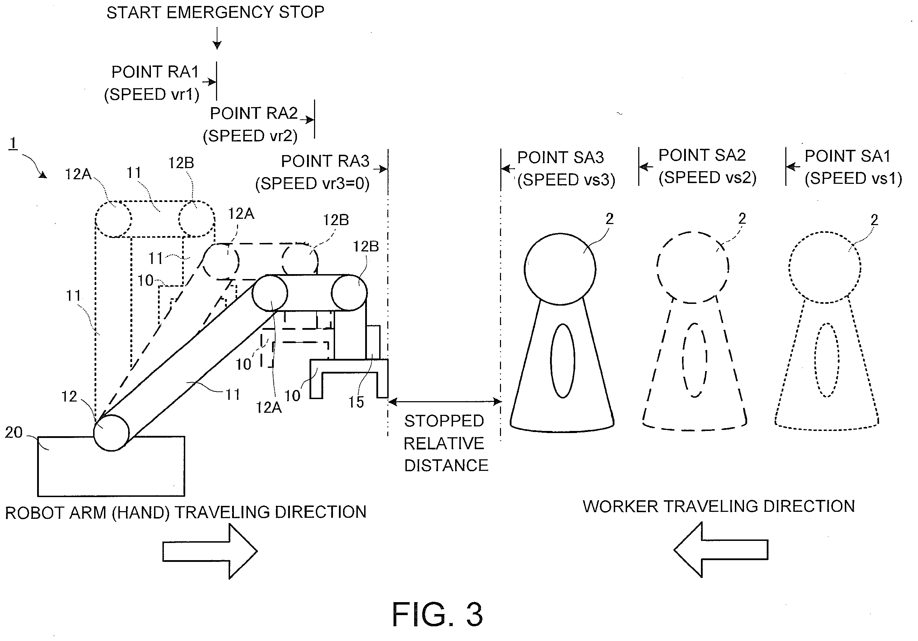

FIG. 3 is a view for specifically describing a method of estimating a stopped relative distance at the time of an emergency stop using the separation distance estimating function unit 31B. In the following description, a case in which a two-dimensional relative speed is used is taken as an example.

When it is assumed that a distal end of the robot 1 is the robot hand 10, the robot hand 10 may move along a trajectory of a point RA1, a point RA2, and a point RA3 toward the worker 2 (in a robot traveling direction). In FIG. 3, the trajectory of the robot hand 10 at the time of emergency stop will be described.

In addition, the worker 2 moves along a trajectory of a point SA1, a point SA2, and a point SA3 toward the robot 1 (in a worker traveling direction). Further, the points RA1 and SA1, the points RA2 and SA2, and the points RA3 and SA3 indicate respective positions of the robot 1 and the worker 2 at the same time.

The stopped relative distance refers to a relative distance between the robot hand 10 (robot 1) and the worker 2 at the time when the robot hand 10 is assumed to have been stopped.

The robot 1 moves at a speed vr1 at the point RA1, a speed vr2 at the point RA2, and a speed vr3 at the point RA3. A magnitude relation of the speed is vr1 > vr2 > vr3 (=0). The worker 2 moves at a speed vs1 at the point SA1, the speed vs2 at the point SA2, and the speed vs3 at the point SA3. Further, the speed vs1, the speed vs2, and the speed vs3 are variable, but may also be constant.

When an emergency stop of the robot hand 10 is performed at the point RA1, the controller 3 calculates the stopped relative distance with the worker 2. Further, it is assumed that the robot hand 10 stops at the point RA3.

At the point RA 1, it is assumed that the controller 3 has made an emergency stop on the robot hand 10 moving at the speed vr1.

Despite having made an emergency stop, the robot hand 10 does not stop at the point RA2 due to inertia of the robot hand 10 and decelerates from the speed vr1. For example, it decelerates from the speed vr1 and further decelerates via the speed vr2.

At the point RA 3, the robot hand 10 has a speed lower than the speed vr2, that is, the speed vr3 at which the speed is 0, and stops.

A distance calculated from a position of the robot hand 10 at the point RA3 and a position of the worker 2 at the point SA3 is the stopped relative distance.

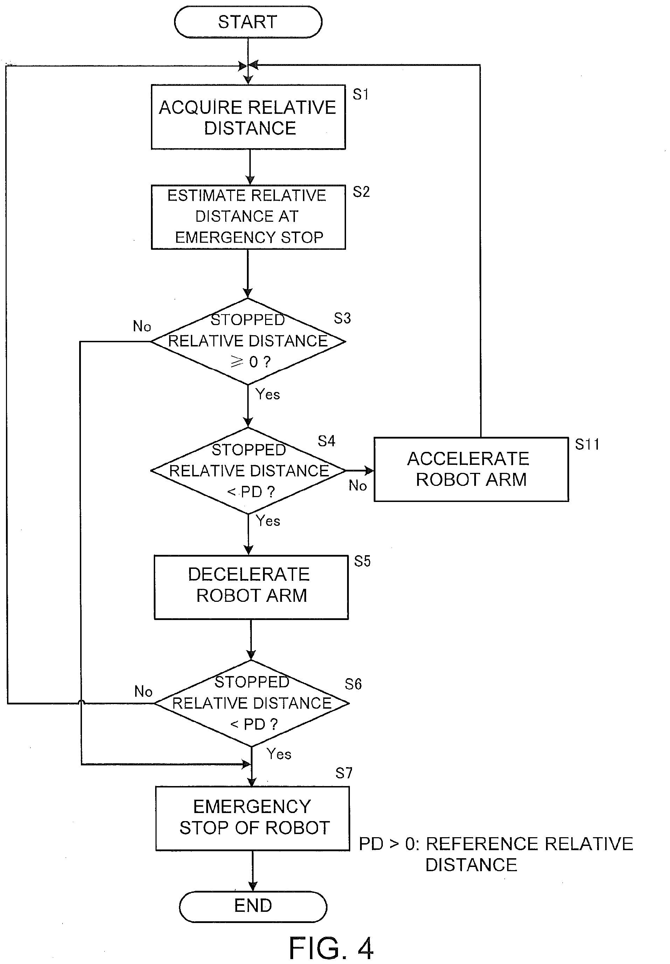

A flow of the control of the sensor and the controller using the relative positional relationship calculated by the configuration illustrated in FIG. 2 and the stopped relative distance calculated from the method illustrated in FIG. 3 will be described with reference to a flowchart of FIG. 4. Further, it is assumed that the sensor 15 is attached to one surface of the robot hand 10, the robot hand 10 is controlled to always face in an entry direction of the worker 2, and the entry direction of the worker 2 is limited.

The sensor 15 acquires a relative distance with the worker 2 (S1). Also, the sensor 15 acquires a relative speed with the worker 2.

The controller 3 estimates a relative distance at the time of emergency stop (S2). The relative distance at the time of emergency stop is a distance between the robot hand 10 and the worker 2 when the robot hand 10 is stopped in a case in which an emergency stop is performed at a current relative distance and current relative speed. That is, when the robot 1 and the worker 2 move forward to a certain point, it is a distance calculated by estimating a case in which an emergency stop is performed at an arbitrary point of time. This is the stopped relative distance.

For example, a relative distance and a relative speed of the distal end of the robot 1, that is, the sensor 15 attached to the robot hand 10 and the worker 2 are calculated. At this time, when an emergency stop is performed, a distance between the robot hand 10 and the worker 2 when the robot hand 10 is stopped is calculated assuming that the robot hand 10 decelerates while the worker 2 does not decelerate.

When the stopped relative distance is a positive value (S3: Yes), the controller 3 determines whether or not the stopped relative distance is smaller than a predetermined stopped distance PD (S4). The positive value in the stopped relative distance means that there is a distance in which the robot hand 10 does not collide with the worker 2 when an emergency stop is made at the present point of time.

When the stopped relative distance is smaller than the stopped distance PD (S4: Yes), the controller 3 decelerates the robot hand 10 while maintaining its moving direction (S5) with respect to the robot 1. That is, the robot hand 10 decelerates while maintaining the trajectory of the robot hand 10. The stopped relative distance smaller than the stopped distance PD means that the robot hand 10 and the worker 2 come close to each other when the robot 1 and the worker 2 move while maintaining the relative speed.

At this time, the deceleration speed is set to satisfy a condition in which the stopped relative distance > PD.

The controller 3 acquires another relative position and relative speed, and determines whether or not the stopped relative distance is smaller than the stopped distance PD (S6). When the stopped relative distance is smaller than the stopped distance PD (S6: Yes), the robot is emergently stopped (S7).

When the stopped relative distance is not a positive value (S3: No), the controller 3 emergently stops the robot hand 10 (S7).

When the stopped relative distance is greater than the stopped distance PD (S4: No), it is determined that the distance between the robot 1 and the worker 2 is sufficient, the robot accelerates to a speed at which it can be accelerated or moves at a constant speed (S11), and another relative speed is acquired (S1).

When the stopped relative distance is greater than the stopped distance PD (S6: No), another relative speed is acquired (S1).

As a result, the robot 1 and the worker 2 can perform a safe cooperative work without collision. Further, a distance at which a movable portion of the robot and the moving body can be prevented from colliding can be made smaller than a conventional configuration.

In the description using the flow described above, the description has been given on the premise that the relative distance and the relative speed between the robot 1 and the worker 2 are detected, however, when only a relative distance is acquired, a relative speed can be acquired by differentiating the relative distance.

Also, when the sensor 15 acquires a relative speed, it is preferable to use a Doppler sensor.

Further, the relative speed described above is specifically calculated as follows. In the following description, a case using a two-dimensional relative speed is taken as an example.

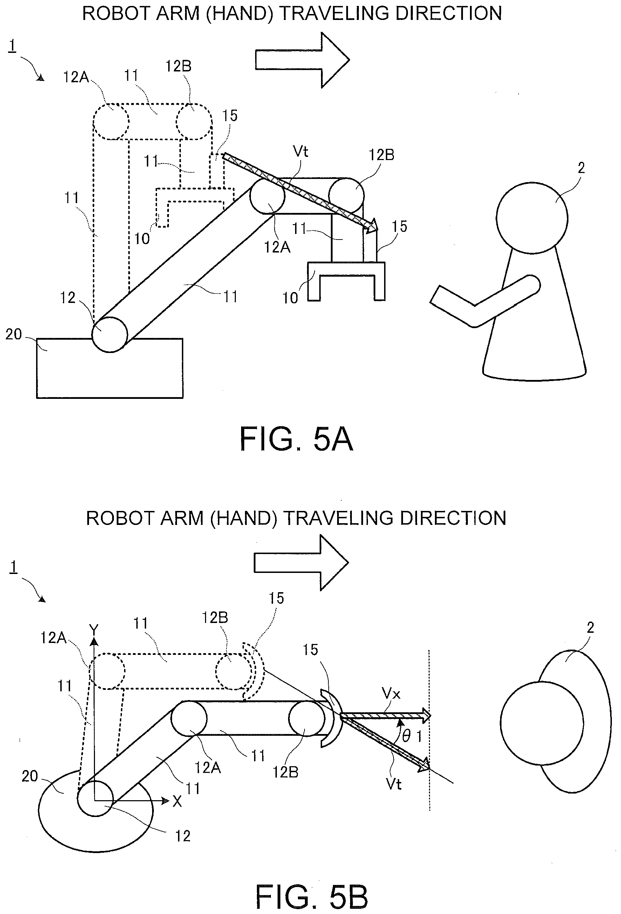

Referring to FIGS. 5A and 5B, an overview of calculating a relative speed of the robot and the worker when the robot is able to move will be described. The robot in FIGS. 5A and 5B is, for example, a vertical articulated robot.

FIG. 5A is a schematic side view of the robot 1 and the worker 2. FIG. 5B is a schematic view of the robot 1 and the worker 2 viewed from a top.

As illustrated in FIG. 5A, a relative speed vector detected by the sensor 15 when the robot hand 10 is moved in a traveling direction toward the worker 2 is defined as Vt.

An axis connecting the robot base 20 (support point 12) to which the robot 1 is fixed and the worker 2 in a straight line is defined as an X axis. An axis perpendicular to the X axis is defined as a Y axis. An angle between the relative speed vector Vt and the X axis is defined as θ1. As a result, an equation for calculating a relative speed Vx of the sensor 15 in the robot 1 with respect to the worker 2 is Vx = Vt × cos 01,

Since the relative speed Vx in a direction connecting the robot 1 and the worker 2 can be calculated, most effective relative speed when performing an emergency stop can be calculated, and thereby safety of the cooperative work of the robot and the human can be improved.

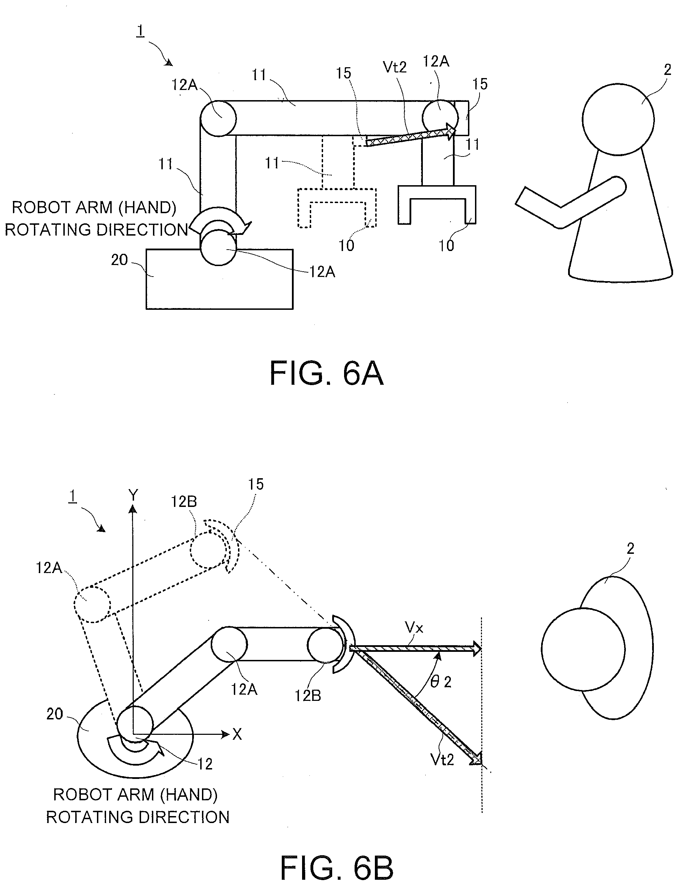

Referring to FIGS. 6A and 6B, an overview of calculating a relative speed of the robot and the worker (person) when the robot is able to move will be described. The robot in FIGS. 6A and 6B is, for example, a horizontal articulated robot.

FIG. 6A is a schematic side view of the robot 1 and the worker 2. FIG. 6B is a schematic view of the robot 1 and the worker 2 viewed from a top.

As illustrated in FIG. 6A, a relative speed vector detected by the sensor 15 when the robot hand 10 is rotated in a rotating direction toward the worker 2 is defined as Vt2.

Referring to FIG. 6B, when the robot hand 10 is moved in the rotating direction toward the worker 2, a case of viewing in a direction from the top will be described using the relative speed vector Vt2 in FIG. 6A.

An axis connecting the robot base 20 (support point 12) to which the robot 1 is fixed and the worker 2 in a straight line is defined as an X axis. An axis perpendicular to the X axis is defined as a Y axis. An angle between the relative speed vector Vt2 and the X axis is defined as θ2. As a result, an equation for calculating a relative speed Vx of the sensor 15 in the robot 1 with respect to the worker 2 is Vx = Vt2 × cos 02.

Even when the robot hand 10 moves in the rotating direction, since the relative speed Vx in the direction connecting the robot hand 10 and the worker 2 can be calculated, a more accurate relative speed can be calculated, and thereby safety of the cooperative work of the robot and the person can be improved.

When the above-described configuration is used, it is possible for the robot and the worker to perform cooperative work more safely without increasing a distance at which the movable portion of the robot and the moving body can be prevented from colliding. In addition, since a distance between the robot and the worker when the robot emergently stops is shorter than a distance based on the prescribed risk determination as in a conventional case, unnecessary stopping of the robot does not occur and productivity can be maintained high.

Also, in the above description, when the distance between the robot and the worker is sufficiently greater than the distance based on the prescribed risk determination, since the speed of the robot can be accelerated, unnecessary efficiency reduction is prevented.

Further, in the above description, the method of calculating the stopped relative distance and the relative speed in the control unit has been described. However, the relative distance and the relative speed may be calculated by a detection unit.

In addition, since other safety protection measures are unnecessary, additional investment (material cost, design, maintenance man-hour) for protecting the robot and the worker can be reduced.

In the above example, the relative speed between the robot and the worker is acquired by attaching a sensor to the distal end of the robot (the robot hand in the above example). However, the same effect can be obtained when a sensor is attached to each of the support points (joints) of the robot. Further, when the relative speed or the relative distance is sensed by each sensor of the support points (joints), more detailed sensing data can be obtained, and thereby safety can be improved further.

## Claims

1. A robot control device for controlling a robot (1), the robot (1) comprising a robot arm (11) adapted to move about a support point (12, 12A, 12B), wherein the robot arm (11) includes a robot hand (10) located at a distal end of the robot arm (11);
wherein the robot control device comprises:
a detection unit (15B) adapted to detect a relative positional relationship with a moving body (2);
a control unit (3B) adapted to generate a drive control signal of an actuator which causes the robot arm (11) to move on the basis of a change in the relative positional relationship between the robot arm (11) and the moving body (2) detected by the detection unit (15B); and
an output unit (3C) adapted to output the drive control signal generated by the control unit (3B) to the actuator,
wherein the detection unit (15B) detects the relative positional relationship between the robot arm (11) and the moving body (2) by a sensor (15) attached to the robot arm (11),
**characterized in that**
the control unit (3B) is further adapted to estimate (S2) a stopped relative distance at the time of an emergency stop, wherein the stopped relative distance is a distance between the robot hand (10) and the moving body (2) when the robot hand (10) is stopped by performing the emergency stop;
the control unit (3B) is further adapted to accelerate (S11) the robot hand (10) when (S4) the stopped relative distance is greater than a predetermined stopped distance (PD), and
when (S4) the stopped relative distance is smaller than the predetermined stopped distance (PD), the control unit (3B) is further adapted to:
decelerate (S5) the robot hand (10) while maintaining its moving direction with respect to the robot (1);
further determine (S6) whether the stopped relative distance is smaller than the predetermined stopped distance (PD), and
emergently stop (S7) the robot hand (10) when (S6) the further determined stopped relative distance is smaller than the predetermined stopped distance (PD).

2. The robot control device according to claim 1, wherein the robot arm (11) includes the support point (12, 12A, 12B) formed on one end portion side thereof and the sensor (15) attached to the other end portion side thereof.

3. The robot control device according to claim 1 or 2, wherein the control unit (3B) is adapted to generate the drive control signal using a relative speed between the robot arm (11) and the moving body (2) calculated from a change in the relative positional relationship between the robot arm (11) and the moving body (2).

4. The robot control device according to any one of claims 1 to 3, wherein the control unit (3B) is adapted to generate the drive control signal using a relative distance between the robot arm (11) and the moving body (2) calculated from a change in the relative speed between the robot arm (11) and the moving body (2).

5. The robot control device according to any one of claims 1 to 4, wherein the control unit (3B) is adapted to generate the drive control signal for stopping the robot arm (11) when the relative distance between the robot arm (11) and the moving body (2) is shorter than the predetermined stopped distance (PD).

6. A robot system comprising:
a robot (1) including a robot arm (11) adapted to move about a support point (12, 12A, 12B), wherein the robot arm (11) includes a robot hand (10) located at a distal end of the robot arm (11); and
a robot control device according to any one of claims 1 to 5.

7. A method of controlling a robot (1) executed by a computer, wherein the robot (1) includes a robot arm (11) adapted to move about a support point (12, 12A, 12B), wherein the robot arm (11) includes a robot hand (10) located at a distal end of the robot arm (11),
the method comprising:
a detection step of detecting a relative positional relationship between the robot arm (11) and a moving body (2) from a detection output of a sensor (15) attached to the robot arm (11);
a generation step of generating a drive control signal of an actuator which causes the robot arm (11) to move on the basis of a change in the relative positional relationship between the detected robot arm (11) and the moving body (2); and
an output step of outputting the drive control signal to the actuator,
**characterized by**:
a step of estimating (S2) a stopped relative distance at the time of an emergency stop, wherein the stopped relative distance is a distance between the robot hand (10) and the moving body when the robot hand (10) is stopped by performing the emergency stop,
a step of accelerating (S11) the robot hand (10) when (S4) the stopped relative distance is greater than a predetermined stopped distance (PD),
and further **characterized in that**:
when (S4) the stopped relative distance is smaller than the predetermined stopped distance (PD), the method further comprises:
a step of decelerating (S5) the robot hand (10);
a step of further determining (S6) whether the stopped relative distance is smaller than the predetermined stopped distance (PD); and
a step of emergently stopping (S7) the robot hand (10) when (S6) the further determined stopped relative distance is smaller than the predetermined stopped distance (PD).

8. A program comprising instructions, which when executed by a computer, are adapted to carry out the method according to claim 7.

## Patentansprüche

1. Robotersteuervorrichtung zum Steuern eines Roboters (1),
wobei der Roboter (1) einen Roboterarm (11) umfasst, der angepasst ist, um sich um einen Stützpunkt (12, 12A, 12B) zu bewegen, wobei der Roboterarm (11) eine Roboterhand (10) enthält, die sich an einem distalen Ende des Roboterarms (11) befindet;
wobei die Robotersteuervorrichtung umfasst:
eine Erfassungseinheit (15B), die angepasst ist, um eine relative positionelle Beziehung mit einen sich bewegenden Körper (2) zu erfassen;
eine Steuereinheit (3B), die angepasst ist, ein Antriebssteuersignal eines Aktuators zu erzeugen, das den Roboterarm (11) veranlasst sich zu bewegen basierend auf einer Änderung in der relativen positionellen Beziehung zwischen dem Roboterarm (11) und dem sich bewegenden Körper (2), erfasst durch die Erfassungseinheit (15B); und
eine Ausgabeeinheit (3C), die angepasst ist, um das Antriebssteuersignal, erzeugt durch die Steuereinheit (3B), an den Aktuator auszugeben,
wobei die Erfassungseinheit (15B) eine relative positionelle Beziehung zwischen dem Roboterarm (11) und dem sich bewegenden Körper (2) durch einen Sensor (15) erfasst, angebracht an den Roboterarm (11), **dadurch gekennzeichnet, dass**
die Steuereinheit (3B) ferner angepasst ist, um einen gestoppten relativen Abstand zu der Zeit eines Not-Stopps zu schätzen (S2),
wobei der gestoppte relative Abstand ein Abstand zwischen der Roboterhand (10) und dem sich bewegenden Körper (2) ist, wenn die Roboterhand (10) gestoppt wird durch Durchführen des Not-Stopps;
wobei die Steuereinheit (3B) ferner angepasst ist, die Roboterhand (10) zu beschleunigen (S11), wenn der gestoppte relative Abstand größer als ein vorbestimmter relativer Abstand (PD) ist (S4), und wenn der gestoppte relative Abstand kleiner als der vorbestimmte Abstand (PD) ist (S4)
die Steuereinheit (3B) ferner angepasst ist, um:
die Roboterhand (10) abzubremsen (S5), während ihre Bewegungsrichtung in Bezug auf den Roboter (1) aufrechterhalten wird;
ferner, um zu bestimmen (S6), ob der gestoppte relative Abstand kleiner als der vorbestimmte gestoppte Abstand (PD) ist, und
um die Roboterhand (10) notfallmäßig zu stoppen (S7), wenn der ferner bestimmte gestoppte relative Abstand kleiner als ein vorbestimmter gestoppter Abstand (PD) ist (S6).

2. Robotersteuervorrichtung gemäß Anspruch 1, wobei der Roboterarm (11) einen Stützpunkt (12, 12A, 12B) enthält, der an einer Endabschnittseite davon ausgebildet ist und der Sensor (15), an der anderen Endabschnittseite davon angebracht ist.

3. Robotersteuervorrichtung gemäß Anspruch 1 oder 2, wobei die Steuereinheit (3B) angepasst ist, um das Antriebssteuersignal unter Verwendung einer relativen Geschwindigkeit zwischen dem Roboterarm (11) und dem sich bewegenden Körper (2), berechnet von einer Änderung in der relativen positionellen Beziehung zwischen dem Roboterarm (11) und dem sich bewegenden Körper (2), zu erzeugen.

4. Robotersteuervorrichtung gemäß irgendeinem der Ansprüche 1 bis 3, wobei die Steuereinheit (3B) angepasst ist, um das Antriebssteuersignal unter Verwendung eines relativen Abstands zwischen dem Roboterarm (11) und dem sich bewegenden Körper (2), berechnet von einer Änderung in der relativen Geschwindigkeit zwischen dem Roboterarm (11) und dem sich bewegenden Körper (2), zu erzeugen.

5. Robotersteuervorrichtung gemäß irgendeinem der Ansprüche 1 bis 4, wobei die Steuereinheit (3B) angepasst ist, um das Antriebssteuersignal zum Stoppen des Roboterarmes (11) zu erzeugen, wenn der relative Abstand zwischen dem Roboterarm (11) und dem sich bewegenden Körper (2) kürzer als der vorbestimmte gestoppte Abstand (PD) ist.

6. Robotersystem, umfassend:
Einen Roboter (1), der einen Roboterarm (11) enthält, der angepasst ist, um sich um einen Stützpunkt (12, 12A, 12B) zu bewegen, wobei der Roboterarm (11) eine Roboterhand (10) enthält, die sich an einem distalen Ende des Roboterarms (11) befindet;
und eine Robotersteuervorrichtung gemäß einem der Ansprüche 1 bis 5.

7. Verfahren zum Steuern eines Roboters (1), ausgeführt durch einen Computer, wobei der Roboter (1) einen Roboterarm (11) enthält, der angepasst ist, um sich um einen Stützpunkt (12, 12A, 12B) zu bewegen, wobei der Roboterarm (11) eine Roboterhand (10) enthält, die sich an einem distalen Ende des Roboterarms (11) befindet,
wobei das Verfahren umfasst:
einen Erfassungsschritt des Erfassens einer relativen positionellen Beziehung zwischen dem Roboterarm (11) und einem sich bewegenden Körper (2) von einer Erfassungsausgabe eines Sensors (15), angebracht an dem Roboterarm (11);
einen Erzeugungsschritt des Erzeugens eines Antriebssteuersignals eines Aktuators, der den Roboterarm (11) veranlasst, sich basierend auf einer Änderung in der relativen positionellen Beziehung zwischen dem erfassten Roboterarm (11) und dem sich bewegenden Körper (2) zu bewegen, und
einen Ausgabeschritt des Ausgebens des Antriebssteuersignals an den Aktuator, **gekennzeichnet durch**:
einen Schritt des Schätzens (S2) eines gestoppten relativen Abstands zu der Zeit eines Notfall-Stopps, wobei der gestoppte relative Abstand ein Abstand zwischen der Roboterhand (10) und dem sich bewegenden Körper ist, wenn die Roboterhand (10) gestoppt wird durch Durchführen des Notfall-Stopps,
einen Schritt des Beschleunigens (S11) der Roboterhand (10) wenn der gestoppte relative Abstand größer als ein vorbestimmter gestoppter Abstand (PD) ist (S4),
und ferner **dadurch gekennzeichnet, dass**:
wenn der gestoppte relative Abstand kleiner als ein vorbestimmter gestoppter Abstand (PD) ist (S4), das Verfahren ferner umfasst:
einen Schritt des Abbremsens (S5) der Roboterhand (10);
einen Schritt des ferner Bestimmens (S6), ob der gestoppte relative Abstand kleiner als der vorbestimmte gestoppte Abstand (PD) ist; und
einen Schritt des Notfall-Stoppens (S7) der Roboterhand (10), wenn der ferner vorbestimmte gestoppte relative Abstand kleiner als der vorbestimmte gestoppte Abstand (PD) ist (S6).

8. Programm, umfassend Anweisungen, die, wenn ausgeführt durch einen Computer, angepasst sind das Verfahren gemäß Anspruch 7 auszuführen.

## Revendications

1. Dispositif de commande de robot pour commander un robot (1), le robot (1) comprenant un bras de robot (11) adapté pour se déplacer autour d'un point de support (12, 12A, 12B), dans lequel le bras de robot (11) comprend une main de robot (10) située à une extrémité distale du bras de robot (11) ;
dans lequel le dispositif de commande de robot comprend :
une unité de détection (15B) adaptée pour détecter une relation de position relative avec un corps mobile (2) ;
une unité de commande (3B) adaptée pour générer un signal de commande d'entraînement d'un actionneur qui provoque un déplacement du bras de robot (11) sur la base d'un changement de la relation de position relative entre le bras de robot (11) et le corps mobile (2) détectée par l'unité de détection (15B) ; et
une unité de sortie (3C) adaptée pour envoyer le signal de commande d'entraînement généré par l'unité de commande (3B) à l'actionneur,
dans lequel l'unité de détection (15B) détecte la relation de position relative entre le bras de robot (11) et le corps mobile (2) à l'aide d'un capteur (15) attaché au bras de robot (11),
**caractérisé en ce que**
l'unité de commande (3B) est en outre adaptée pour estimer (S2) une distance relative à l'arrêt lors d'un arrêt d'urgence, dans lequel la distance relative à l'arrêt est une distance entre la main de robot (10) et le corps mobile (2) quand la main de robot (10) est arrêtée en effectuant l'arrêt d'urgence ;
l'unité de commande (3B) est en outre adaptée pour accélérer (S11) la main de robot (10) quand (S4) la distance relative à l'arrêt est supérieure à une distance à l'arrêt prédéterminée (PD), et
quand (S4) la distance relative à l'arrêt est inférieure à la distance à l'arrêt prédéterminée (PD), l'unité de commande (3B) est en outre adaptée pour :
décélérer (S5) la main de robot (10) tout en maintenant sa direction de déplacement par rapport au robot (1) ; déterminer ultérieurement (S6) si la distance relative à l'arrêt est ou non inférieure à la distance à l'arrêt prédéterminée (PD), et
arrêter d'urgence (S7) la main de robot (10) quand (S6) la distance relative à l'arrêt déterminée ultérieurement est inférieure à la distance à l'arrêt prédéterminée (PD).

2. Dispositif de commande de robot selon la revendication 1, dans lequel le bras de robot (11) comprend le point de support (12, 12A, 12B) formé sur un côté de portion d'extrémité de celui-ci et le capteur (15) attaché à l'autre côté de portion d'extrémité de celui-ci.

3. Dispositif de commande de robot selon la revendication 1 ou 2, dans lequel l'unité de commande (3B) est adaptée pour générer le signal de commande d'entraînement en utilisant une vitesse relative entre le bras de robot (11) et le corps mobile (2) calculée à partir d'un changement de la relation de position relative entre le bras de robot (11) et le corps mobile (2).

4. Dispositif de commande de robot selon l'une quelconque des revendications 1 à 3, dans lequel l'unité de commande (3B) est adaptée pour générer le signal de commande d'entraînement en utilisant une distance relative entre le bras de robot (11) et le corps mobile (2) calculée à partir d'un changement de la vitesse relative entre le bras de robot (11) et le corps mobile (2) .

5. Dispositif de commande de robot selon l'une quelconque des revendications 1 à 4, dans lequel l'unité de commande (3B) est adaptée pour générer le signal de commande d'entraînement pour arrêter le bras de robot (11) quand la distance relative entre le bras de robot (11) et le corps mobile (2) est inférieure à la distance à l'arrêt prédéterminée (PD).

6. Système de robot, comprenant :
un robot (1) comportant un bras de robot (11) adapté pour se déplacer autour d'un point de support (12, 12A, 12B), dans lequel le bras de robot (11) comporte une main de robot (10) située à une extrémité distale du bras de robot (11) ; et
un dispositif de commande de robot selon l'une quelconque des revendications 1 à 5.

7. Procédé de commande d'un robot (1) exécuté par un ordinateur, dans lequel le robot (1) comprend un bras de robot (11) adapté pour se déplacer autour d'un point de support (12, 12A, 12B), dans lequel le bras de robot (11) comprend une main de robot (10) située à une extrémité distale du bras de robot (11),
le procédé comprenant :
une étape de détection consistant à détecter une relation de position relative entre le bras de robot (11) et un corps mobile (2) à partir d'une sortie de détection d'un capteur (15) attaché au bras de robot (11) ;
une étape de génération consistant à générer un signal de commande d'entraînement d'un actionneur qui provoque un déplacement du bras de robot (11) sur la base d'un changement de la relation de position relative détectée entre le bras de robot (11) et le corps mobile (2) ; et
une étape de sortie consistant à envoyer le signal de commande d'entraînement à l'actionneur,
**caractérisé par** :
une étape d'estimation (S2) d'une distance relative à l'arrêt lors d'un arrêt d'urgence, dans lequel la distance relative à l'arrêt est une distance entre la main de robot (10) et le corps mobile quand la main de robot (10) est arrêtée en effectuant l'arrêt d'urgence, une étape d'accélération (S11) de la main de robot (10) quand (S4) la distance relative à l'arrêt est supérieure à une distance à l'arrêt prédéterminée (PD),
et **caractérisé en outre en ce que** :
quand (S4) la distance relative à l'arrêt est inférieure à la distance à l'arrêt prédéterminée (PD), le procédé comprend en outre :
une étape de décélération (S5) de la main de robot (10) ;
une étape de détermination ultérieure (S6) du fait que la distance relative à l'arrêt est inférieure ou non à la distance à l'arrêt prédéterminée (PD) ; et
une étape d'arrêt d'urgence (S7) de la main de robot (10) quand (S6) la distance relative à l'arrêt déterminée ultérieurement est inférieure à la distance à l'arrêt prédéterminée (PD).

8. Programme comprenant des instructions qui, lorsqu'elles sont exécutées par un ordinateur, sont adaptées pour mettre en œuvre le procédé selon la revendication 7.
